Europäisches Patentamt

European Patent Office

Office européen des brevets

(11) **EP 1 508 902 A2**

(19)

(12) **EUROPEAN PATENT APPLICATION**

(43) Date of publication:
**23.02.2005 Bulletin 2005/08**

(51) Int Cl.⁷: **G21C 5/00**, G21C 3/32,
G21C 17/00

(21) Application number: **04255002.0**

(22) Date of filing: **19.08.2004**

| | |
|---|---|
| (84) Designated Contracting States:<br>**AT BE BG CH CY CZ DE DK EE ES FI FR GB GR<br>HU IE IT LI LU MC NL PL PT RO SE SI SK TR**<br>Designated Extension States:<br>**AL HR LT LV MK** | • **Russell II, William E.**<br>**Wilmington, North Carolina 28405 (US)**<br>• **Kropaczek, David J.**<br>**Wilmington, North Carolina 28412 (US)** |
| (30) Priority: **22.08.2003 US 645632** | (74) Representative: **Pedder, James Cuthbert**<br>**London Patent Operation,**<br>**General Electric International, Inc.,** |
| (71) Applicant: **Global Nuclear Fuel-Americas, LLC**<br>**Wilmington, North Carolina 28402 (US)** | **15 John Adam Street**<br>**London WC2N 6LU (GB)** |
| (72) Inventors:<br>• **Daubert, Catherine A.**<br>**Wilmington, North Carolina 28401 (US)** | |

(54) **Method and arrangement to determine fuel bundle configuration for core of a nuclear reactor**

(57)    A method and arrangement for determining a fuel bundle configuration for a core of a nuclear reactor may provide a design for a fuel bundle that satisfies core thermal limits and user-defined target conditions of a given core. The resulting fuel bundle configuration may meet the limits and conditions while having a reduced number of different pin types therein, potentially lowering manufacturing costs and turnaround time to a consumer.

EP 1 508 902 A2

**Description**

The present invention relates generally to nuclear reactors, and more particularly to determining a fuel bundle configuration for a core of a nuclear reactor.

A boiling water reactor (BWR) or pressurized water reactor (PWR) typically operates from one to two years before requiring fuel replacement. This period is referred to as a fuel cycle or energy cycle. Upon completion of a cycle, approximately ¼ to ½ (typically about 1/3) of the least reactive fuel in the reactor core is discharged to a spent fuel pool. The number of fuel assemblies (e.g., fuel bundles) discharged typically are replaced by an equal number of fresh fuel assemblies (e.g., fresh bundles).

The fresh bundles may vary in bundle average enrichment (the average % of enriched uranium (U235) and poisons (such as gadolinium) across the bundle, determined by the total weight of U235 and gadolinium in the bundle divided by the weight of the bundle, local peaking characteristics, exposure peaking, R-factor characteristics, and overall exposure dependent reactivity. The exposure dependent local peaking factor of the fresh bundle may be determined from the maximum local peaking value in any pin (e.g., a pin is a particular pin in a fuel bundle or assembly) of the fresh bundle in question. The higher the local peaking factor, the higher the Maximum Fraction of Limiting Power Density (MFLPD) and Maximum Average Planar Linear Heat Generation Rate (MAPLHGR), which are power-related limits on nuclear fuel. The R-factor for each pin of a bundle is defined with respect to the correlation employed for bundle Critical Power Ratio (CPR), a power-related fuel limit, and is calculated for each pin as a weighted average of the axially integrated rod powers in the vicinity of the given pin. In other environments, alternate correlations for CPR may exist that reference R-factor by another term that is similarly based on a weighted average of rod powers within the bundle. The R-Factor for a fresh bundle may be determined from the maximum R-Factor in any pin of the fresh bundle in question. Likewise, the higher the R-factor, the higher the Maximum Fraction of Limiting Critical Power Ratio (MFLCPR), which is also a power-related fuel limit. MFLCPR measures the allowable margin between operating conditions and a limit to 'dryout', explained in further detail below.

When coolant in a core can no longer remove heat at a sufficient rate, the fuel and clad temperature will start to increase rapidly. This boiling transition condition may be known as film dryout, burnout, departure from nucleate boiling, etc., depending on the actual conditions leading to the temperature excursion. For BWR fuel, the boiling transition phenomenon may be referred to as dryout. An R-factor value may be a value correlating thermal hydraulic variables (such as flow rate, inlet subcooling, system pressure, hydraulic diameter) to the axially integrated pin power distribution within the bundle. Exposure peaking is related to the integral of the local peaking of each individual pin (fuel rod) and is constrained by the maximum licensed exposure capability of the fuel.

Because local peaking and R-factor values in any fuel bundle are directly proportional to core thermal limits such as MAPLHGR limits (KW/ft limits) and MFLCPR limits, it is beneficial to effectively determine local peaking and R-factor values at each exposure. Determining accurate local peaking and R-factor values at each exposure during a core or fuel bundle design phase may aid efforts to develop fuel bundles that meet core performance criteria for a specified reactor plant, so as not to violate any of the core thermal limits, while still meeting other criteria such as bundle average enrichment, hot-to-cold swing (reactivity excursion at beginning of cycle (BOC) from hot, uncontrolled conditions to cold, controlled conditions), and overall exposure dependent reactivity. Exposure peaking should also be considered at the design time, as a high exposure peaking factor limits the maximum bundle exposure and therefore the maximum reload enrichment that can be loaded in the reactor.

Currently, design engineers utilize "rules of thumb" regarding the relative relationship between uranium enrichment and gadolinium concentration and the dependent effects of local peaking exposure peaking and R-Factor on fuel bundle performance. Therefore, pin enrichments and gadolinium content throughout a reactor core are iterated by hand. Resulting bundles would be considered finished even though additional improvements could have been performed. Alternatively, bundle designs would take a large amount of iterations and time to perform.

One process of making modifications to an existing fuel bundle design, so as to meet the requirements of a larger core design and operating strategy, involves extracting information from a detailed fuel cycle simulation, converting this information into fuel characteristic changes, and then modifying a two-dimensional (2D) enrichment and gadolinium pin (rod) placement (e.g., 2D enrichment distribution) to yield these changes. This process is significantly complex, as looping through design iterations is time consuming, since the conventional computer simulation code used to implement the rules of thumb and to perform these iterations is inefficient and laborious. A single iteration typically takes from about four (4) hours to the better part of a day, with extensive cost in terms of manpower. Accordingly, very few iterations are typically performed, due to the difficulty and time needed to perform a single iteration using the aforementioned thumb rules and code. Thus, a final bundle solution that is chosen using the above process is typically not the best possible solution for a given fuel bundle design, but rather the best answer based on a finite time limit.

Additionally, designers have become increasingly frustrated as to how inaccurate "rules of thumb" regarding the changing of enrichment and gadolinium content in a given pin would effect the resulting local peaking and R-factors for a given bundle (e.g., secondary effects). Because a large number of fresh fuel bundles are typically required for a given fuel cycle, if the "rule of thumb" used in the iterations is erroneous, which frequently may be the case, the efforts and man hours used to model the bundle are wasted. Accordingly, the resulting core design of fresh fuel assemblies for a prospective fuel cycle may not be as effective as it could be in determining the desired local peaking and R-factor values across core exposures, while meeting other criteria such as bundle average enrichment, hot-to-cold swing, and overall exposure dependent reactivity.

Moreover, changing enrichments and gadolinium content in the fuel bundle design process may pose a manufacturing dilemma. Axially, a fuel bundle is divided theoretically into lattices, or zones. A lattice is uniform from top to bottom; i.e. the cross section of a lattice (or the cross section of the component pins of the bundle at that lattice) is constant throughout the lattice. In a BWR for example, lattice boundaries are the only places where changes in enrichment and gadolinium can occur. Thus a cross section from one lattice can be different from the cross section of another lattice. Since a fuel bundle is composed of varying lattices, when a fuel bundle's enrichment and gadolinium content are changed in one lattice without regard to other lattices, it is possible, in the design phase, to end up with a complicated fuel bundle containing many different pin types. This is not desirable from a manufacturing cost standpoint.

Exemplary embodiments of the present invention are directed to a method and arrangement to determine a fuel bundle configuration for a core of a nuclear reactor, to provide a design for a fuel bundle that satisfies core thermal limits and user-defined target conditions of a given core. The design may meet the limits and conditions while having a reduced number of different pin types therein, potentially lowering costs in manufacturing the fuel bundle for a given core, as well as reducing turnaround time to the reactor plant client or consumer.

In an exemplary embodiment of the method, a plurality of inputs for one or more existing fuel bundles of a given core are defined, and a virtual core loaded with the existing fuel bundles may be simulated to obtain simulation results. The simulation results may be compared against said core thermal limits, and one or more of the bundles may be modified based on the comparison. This may be done by making pin-by-pin changes to determine a desired fuel bundle configuration for insertion into the virtual core that meets the core thermal limits and user-defined target conditions.

Another exemplary embodiment is directed to a method of determining a fuel bundle configuration for a core of a nuclear reactor using optimization techniques. The method employs one or more optimization routines analyzing pin-type by pin-type changes in one or more pin locations of a fuel bundle, in an effort to achieve a desired fuel bundle configuration that meets user-defined target conditions and core thermal limits for a given core with the fewest number of different pin types.

The invention will now be described in greater detail, by way of example, with reference to the drawings, in which:-

FIG.1 illustrates an arrangement for implementing the method in accordance with an exemplary embodiment of the invention.

FIG. 2 illustrates an impact on local power peaking distribution resulting from a change in a single pin enrichment in accordance with an exemplary embodiment of the invention.

FIG. 3 is a flow chart describing a method of determining a fuel bundle configuration in accordance with an exemplary embodiment of the invention.

FIG. 4 is a flow diagram describing a global optimization routine in accordance with an exemplary embodiment of the invention.

FIG. 5 is a graph of Maximum Fraction of Limiting Critical Power Ratio (MFLCPR) versus exposure for an initial, unmodified fuel bundle configuration of a given core.

FIG. 6 is a graph of Maximum Fraction of Limiting Power Density (MFLPD) versus exposure for an initial, unmodified fuel bundle configuration of a given core.

FIG. 7 illustrates the enrichment configuration of the fuel bundle prior to optimization in accordance with an exemplary embodiment of the invention.

FIG. 8 illustrates a relative change in MFLCPR over exposure for a core that includes a fuel bundle modeled in accordance with an exemplary embodiment of the invention.

FIG. 9 illustrates a relative change in MFLPD over exposure for a core that includes a fuel bundle modeled in accordance with an exemplary embodiment of the invention.

FIG. 10 illustrates maximum R-factor values over exposure after core simulation of a fuel bundle configured in accordance with an exemplary embodiment of the invention.

FIG. 11 illustrates maximum local peaking values over exposure after core simulation of a fuel bundle configured in accordance with an exemplary embodiment of the invention.

FIG. 12 illustrates the enrichment configuration of the fuel bundle after optimization in accordance with an exemplary embodiment of the invention.

FIG. 13 illustrates MFLCPR across the core after insertion of the optimized fuel bundle in accordance with an exemplary embodiment of the invention.

FIG. 14 illustrates MFLPD across the core after insertion of the optimized fuel bundle in accordance with an exemplary embodiment of the invention.

As used herein, the term "pin" may be a particular fuel rod in a fuel bundle (fuel assembly); thus the terms pin and fuel rod (rod) may be used synonymously in this disclosure. Additionally, a response surface model hereafter may occasionally be referred to as both a response surface matrix or a response surface. Further, a "fuel bundle configuration" as described herein may be understood as a design of one or more fresh fuel assemblies, hereafter referred to as 'fuel bundles' to be manufactured for insertion into an existing core of a nuclear reactor plant at a planned outage, for example, or any number of fresh fuel bundles of an initial core design for a specified nuclear reactor plant.

The method and arrangement for determining a fuel bundle configuration for a core of a nuclear reactor may employ a graphical user interface (GUI) and a processing medium (e.g., software-driven program, processor, application server, etc.). The GUI and processing medium, in conjunction with one or more calculations servers, databases and/or memories, may enable a user to graphically direct an expedited process of modifying an existing fuel bundle design of a given core, so as to meet the requirements of a larger core design and operating strategy for the given core.

The arrangement may allow the user, via the processing medium and GUI, to automate the following operations which include, but are not limited to: selecting a initial set of pin types from a stored pin library, directing optimization of changes in enrichment and/or gadolinium content necessary to meet target bundle parameters, applying such changes to an appropriate derivative matrix of a response surface that has been determined in advance and stored in memory, in order to estimate model bundle parameters for a test bundle, and directing simulation of a virtual core loaded with the test bundle so as to generate simulation results. The simulation results may be compared to core thermal limits of a given core so that the user may gauge, based on displayed data, whether an acceptable fuel bundle configuration has been determined for the given core. It thus follows that the arrangement may provide feedback to the user, based on how closely a modeled core containing a particularly designed fuel bundle meets core thermal limits and/or user (client)-defined target conditions.

The exemplary embodiments of the present invention may provide several advantages. The method and arrangement may enable production of fuel bundles having a desired local peaking and R-factor performance. Consequently, given fuel cycles typically may be loaded and operated such that less fuel may be needed for identical cycle lengths, potentially resulting in improved fuel cycle economics. Additionally, because fuel bundle development may require fewer iterations, there may be a significant cycle time reduction in the bundle design process, potentially reducing cost and enhancing profitability.

Moreover, and in accordance with the exemplary embodiments of the present invention, enrichment and gadolinium content is not viewed in terms of pellets, but instead enrichment and gadolinium content is changed in an entire pin at a time. Thus, fuel bundles may be designed in a more realistic way, by viewing the bundle as a two-dimensional collection of pins. The 'pin count' (i.e., count of number of different pin types, e.g., the number of different pins in terms of enrichment and/or gadolinium content within the bundle) may be one component of an optimization; and the user has the ability to minimize pin count, which may have a positive impact on manufacturing. If a fuel bundle design for a given core has a reduced pin count (fewer different pin types), the bundle is easier to build. The user determines which pins can be used in the optimization, and has the option to either minimize pin count (for a bundle that will be built) or ignore pin count (if the bundle is only to be used in a "theoretical" setting), for example.

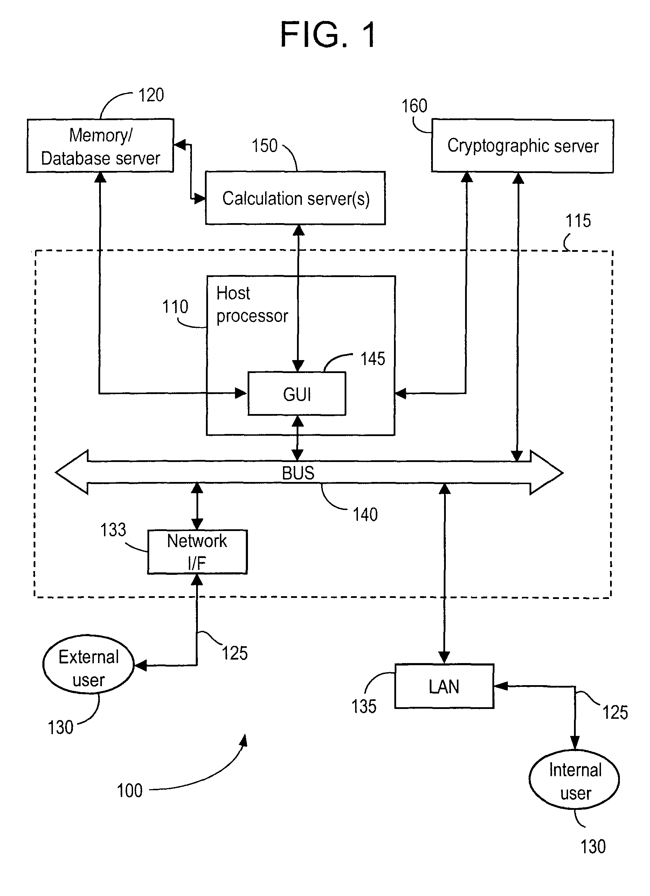

FIG. 1 illustrates an arrangement 100 for implementing the method in accordance with and exemplary embodiment of the invention. Referring to FIG. 1, arrangement 100 may include a processor 110 that communicates with an internal memory 120, which may contain the database that stores the response surface. Processor 110 represents a central nexus from which real time and non-real functions in arrangement 100 may be performed, such as graphical-user interface (GUI) and browser functions, directing all calculations and accessing of data in order to determine a desired fuel bundle configuration, and for the creation of suitable graphical representations of various features of the modeled fuel bundle. For example, processor 110 may be constructed with conventional microprocessors such as currently available PENTIUM processors.

Arrangement 100 could be embodied as a network. Processor 110 could be part of an application server 115 (shown in dotted line) on the network for access by both internal and external users 130, via suitable encrypted communication medium such as an encrypted 128-bit secure socket layer (SSL) connection 125, although the present invention is not limited to this encrypted communication medium. Hereinafter, the term user may refer to both an internal user and an external user. A user could connect to the network and input data or parameters over the internet from any one of a personal computer, laptop, personal digital assistant (PDA), etc., using a suitable input device such as a keyboard, mouse, touch screen, voice command, etc., and a network interface 133 such as a web-based internet browser. Further, processor 110 on such a network could be accessible to internal users 130 via a suitable local area network (LAN) 135 connection, for example.

The graphical information may be communicated over the 128-bit SSL connection 125 or LAN 135, to be displayed on a suitable terminal unit such as a display device of the user 130, PDA, PC, etc. For example, a user 130 may be any of a representative of a nuclear reactor plant accessing the website to determine a fuel bundle configuration or core design for his or her nuclear reactor, a vendor hired by a reactor plant site to develop core designs using the exemplary embodiments of the present invention, or any other user authorized to receive or use the information generated by the exemplary embodiments of the present invention.

Processor 110 may be operatively connected to a cryptographic server 160. Accordingly, processor 110 may implement all security functions by using the cryptographic server 160, so as to establish a firewall to protect the arrangement 100 from outside security breaches. Further, cryptographic server 160 may secure all personal information of all users registered with a website hosting a program implemented by the method and arrangement 100 in accordance with the exemplary embodiment of the invention.

If processor 110 is part of an application server 115 on a network, for example, conventional bus architectures may be used to interface between components, such as peripheral components interconnect (PCI) bus (140) that is standard in many computer architectures. Alternative bus architectures such as VMEBUS, NUBUS, address data bus, RAMbus, DDR (double data rate) bus, etc. could of course be utilized to implement such a bus.

Processor 110 may include a GUI 145, which may be embodied in software as a browser. Browsers are software devices which present an interface to, and interact with, users of the arrangement 100. The browser is responsible for formatting and displaying user-interface components (e.g., hypertext, window, etc.) and pictures.

Browsers are typically controlled and commanded by the standard hypertext mark-up language (HTML). Additionally, or in the alternative, any decisions in control flow of the GUI 145 that require more detailed user interaction may be implemented using JavaScript. Both of these languages may be customized or adapted for the specific details of a implementation, and images may be displayed in the browser using well known JPG, GIF, TIFF and other standardized compression schemes, other non-standardized languages and compression schemes may be used for the GUI 145, such as XML, "home-brew" languages or other known non-standardized languages and schemes.

As noted above, processor 110 may perform all the calculations required to process user entered data, such as generation of and use of a response surface matrix stored in memory 120, as to be described in further detail below, and to provide results, which may be embodied as an enrichment map with estimated R-factor and local peaking data, on a pin-by-pin basis, for a particular fuel bundle configuration, for example, and/or other plant related data associated with the determination of pin enrichments and/or gadolinium content, as to be discussed further below. This data may be displayed on a suitable display, via the GUI 145, under the direction of processor 110.

Memory 120 may be integral with processor 110, external, configured as a database server, and/or may be configured within a relational database server, for example, that may be accessible by processor 110. Memory 120 may store a response surface model that includes derivative matrices, and the aforementioned pin library, to be described in further detail hereafter. The response surface model, or actual Nuclear Regulatory Commission (NRC)-approved fuel bundle simulation codes such as TGBLA or CASMO, for example, may be used by processor 110 to determine enrichment and/or gadolinium changes to be made across a fuel bundle. Alternatively, instead of processor 110 performing the calculations, processor 110 may direct a plurality of calculation servers 150, which could be embodied as Windows 2000 servers, for example, to perform calculations such as optimization routines using the response surface model. Further, the exemplary embodiments of the present invention may be implemented by a software program driven by processor 110 and implemented at the calculation servers 150, with calculation servers having access to memory 120.

Exemplary embodiments of the present invention may utilize a response surface to define relationships between enrichment and bundle parameters, i.e. local peaking, R-factor, bundle enrichment, as to be illustrated in more detail in the derivative matrices below. The relationship to core parameters (MAPLHGR, MFLCPR, MFLPD, etc.) may be represented by a simple linear function between the core parameters and the corresponding bundle parameters.

Local Peaking Factors and Enrichment

As previously described, a fuel bundle is divided into lattices that are uniform from top to bottom. In a BWR, for example, lattice boundaries are the only places where changes in enrichment and gadolinium can occur. Thus a cross section from one lattice can be different from the cross section of another lattice.

Regarding lattice local peaking factors, a given lattice design iteration in accordance with the exemplary embodiments of the invention may be determined using a response surface matrix as described by the following expression (1), where the change in local peaking factors is a function of individual pin enrichment changes by lattice.

$$
\begin{bmatrix} \Delta P_1 \\ \Delta P_2 \\ . \\ . \\ \Delta P_n \end{bmatrix}
=
\begin{bmatrix}
\dfrac{\partial P_1}{\partial e_1} & \dfrac{\partial P_1}{\partial e_2} & . & . & \dfrac{\partial P_1}{\partial e_n} \\
\dfrac{\partial P_2}{\partial e_1} & \dfrac{\partial P_2}{\partial e_2} & & . & \\
& & . & & \\
\dfrac{\partial P_n}{\partial e_1} & & & & \dfrac{\partial P_n}{\partial e_n}
\end{bmatrix}
\times
\begin{bmatrix} \Delta e_1 \\ \Delta e_2 \\ . \\ . \\ \Delta e_n \end{bmatrix}
\qquad (1)
$$

The n x n matrix in expression (1) corresponds to a response surface matrix for one lattice L, where each element may be defined as:

$\dfrac{\partial P_i}{\partial e_j}$ the change in local peaking in pin(i) for a change of enrichment in pin(j)

where

$\Delta e_i$ is the change in pellet enrichment in lattice L of pin i; and

$\Delta P_i$ is the change in local peaking in lattice L of pin i.

A similar set of derivatives encompasses resultant changes in bundle parameters (e.g., hot and cold $k_\infty$) based on changes in gadolinium content. The term $k_\infty$ is the neutron multiplicity factor for a core of infinite size, used to determine core reactivity levels.

A designer may utilize actual changes (standard pellet versus calculated pellet enrichments) and estimate what the local peaking, exposure peaking and R-factor changes will be a-priori from expression (1). In this way, the designer can review their choices of enrichment changes and make necessary modifications before repeating the physics calculations. This may be useful when trying to simplify the fuel bundle design by combining pins of different enrichments, for example.

If enrichment is changed (either up or down) in a given lattice location, the local pin power may be expected to go up or down by some amount. This amount is calculated as $(\partial P_i/\partial e_i)$ in expression (1) above. Other fuel pins near the changed fuel pin may also change in power. The off diagonal terms in expression (1) represent this response.

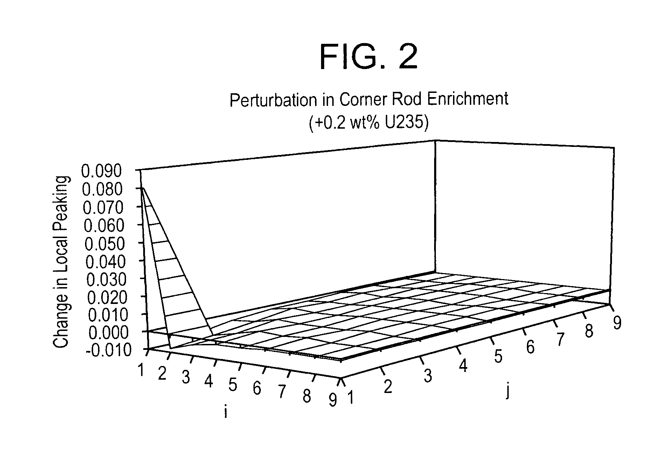

FIG. 2 illustrates an impact on local power peaking distribution resulting from the change in a single pin enrichment in accordance with exemplary embodiments of the invention. FIG. 2 graphically illustrates an individual perturbation within a response surface for a single pin location in a bundle, and in this exemplary case, pin locations for an exemplary 9x9 fuel bundle are shown, with (i, j) notation representing pin locations (fuel rod locations). Thus, at (1,1), the enrichment had been increased by 0.2 wt% U235. As a result of this change in enrichment at the (1,1) location, the local peaking in the (1,1) location increased by approximately 0.08 and the local peaking in the (2,1) location and (1,2) location decreased by approximately 0.01.

These derivatives may be used to predict changes in local peaking and R-factor when changes are made to pin enrichments. Initially, the derivatives are created using a set of base bundles that were created based on their blandness and normalcy. These derivatives may be constant throughout the optimization. Then, for each enrichment change in each pin, the bundle parameters have a corresponding change. For example, if the change in enrichment in pin 1 is represented by $\Delta e_1$, then the change in local peaking in the entire lattice may be represented by expression (2):

$$\begin{bmatrix} \Delta P_1 \\ \Delta P_2 \\ . \\ . \\ . \\ \Delta P_N \end{bmatrix} = \begin{bmatrix} \dfrac{\partial P_1}{\partial e_1} & \dfrac{\partial P_1}{\partial e_2} & . & . & \dfrac{\partial P_1}{\partial e_n} \\ \dfrac{\partial P_2}{\partial e_1} & \dfrac{\partial P_2}{\partial e_2} & . & . & \\ & & . & & \\ \dfrac{\partial P_n}{\partial e_1} & & & & \dfrac{\partial P_n}{\partial e_n} \end{bmatrix} \bullet \begin{bmatrix} \Delta e_1 \\ 0 \\ 0 \\ . \\ . \\ 0 \end{bmatrix} \qquad (2)$$

These derivative matrices ('derivatives') may be calculated in advance. However, these derivatives could also be calculated in almost real time, e.g., concurrently during the process of determining a particular fuel bundle configuration, specifically for that bundle.

R-factors

R-factor may also be calculated similarly. R-factor is not lattice dependent, and so the changes in R-factor for a particular bundle can be captured with a single matrix, as illustrated in expression (3):

$$\begin{bmatrix} \Delta R_1 \\ \Delta R_2 \\ . \\ . \\ \Delta R_n \end{bmatrix} = \begin{bmatrix} \dfrac{\partial R_1}{\partial e_1} & \dfrac{\partial R_1}{\partial e_2} & . & . & \dfrac{\partial R_1}{\partial e_n} \\ \dfrac{\partial R_2}{\partial e_1} & \dfrac{\partial R_2}{\partial e_2} & . & . & \\ & & . & & \\ \dfrac{\partial R_n}{\partial e_1} & & & & \dfrac{\partial R_n}{\partial e_n} \end{bmatrix} \times \begin{bmatrix} \Delta e_1 \\ \Delta e_2 \\ . \\ . \\ \Delta e_n \end{bmatrix} \quad (3)$$

The n x n matrix in expression (3) corresponds to a response surface matrix where each element may be defined as:

$\dfrac{\partial R_i}{\partial e_j}$ the change in R-factor in pin(i) for a change of enrichment in

pin(j), where

$\Delta e_i$ is the change in pellet enrichment in pin i; and

$\Delta R_i$ is the change in R-factor of pin i.

Thus the change in R-factor for an entire bundle is represented by the following expression (4) when pin 1 is changed by an amount $\Delta e_1$:

$$\begin{bmatrix} \Delta R_1 \\ \Delta R_2 \\ . \\ . \\ . \\ \Delta R_N \end{bmatrix} = \begin{bmatrix} \dfrac{\partial R_1}{\partial e_1} & \dfrac{\partial R_1}{\partial e_2} & . & . & \dfrac{\partial R_1}{\partial e_n} \\ \dfrac{\partial R_2}{\partial e_1} & \dfrac{\partial R_2}{\partial e_2} & . & . & \\ & & . & & \\ \dfrac{\partial R_n}{\partial e_1} & & & & \dfrac{\partial R_n}{\partial e_n} \end{bmatrix} \bullet \begin{bmatrix} \Delta e_1 \\ 0 \\ 0 \\ . \\ . \\ 0 \end{bmatrix} \qquad (4)$$

Average Bundle Enrichment

Average bundle enrichment is a scalar value for a bundle, and so its derivative is expressed simply as $(\partial B / \partial E)$, where B is the fuel bundle's average enrichment. This derivative may be used to predict average bundle enrichment based on changes in single pin enrichments, which facilitates optimization of the bundle based on a user-defined target average bundle enrichment.

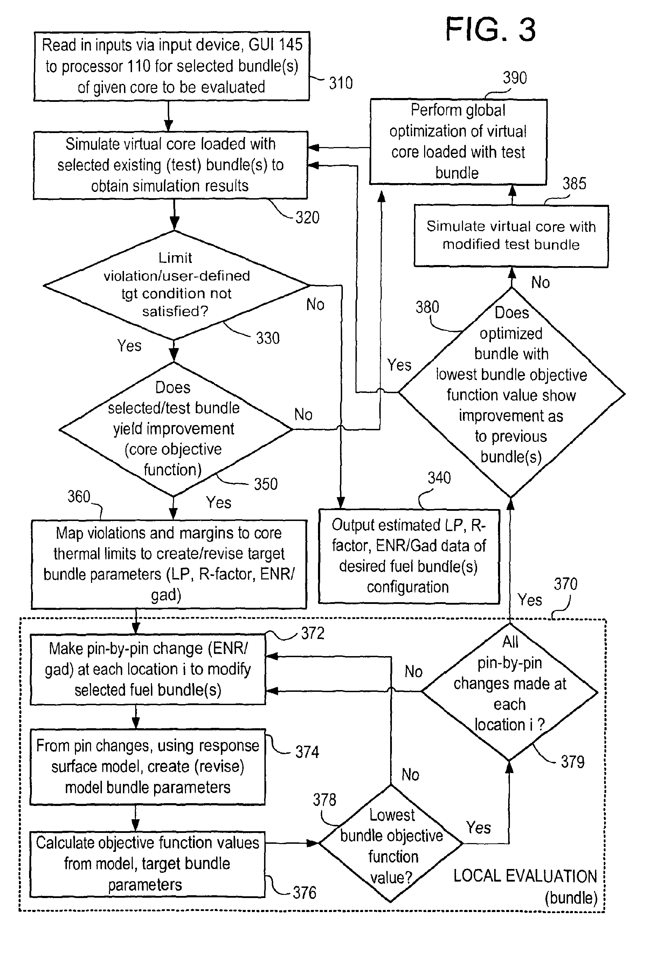

FIG. 3 is a flow chart describing a method determining a fuel bundle configuration in accordance with an exemplary embodiment of the invention. In FIG. 3 input parameters and target conditions of a given core may be initially read in (function 310) to processor 110. A user may enter the input parameters and target conditions via an input device (i.e., mouse, touch screen, keyboard, audible command, etc.) and GUI 145, for example.

The inputs may include core thermal limits of a selected or given core to be modeled, user-defined target conditions for at least one existing fuel bundle of the given core, and fuel bundle parameters of existing bundles. The fuel bundle parameters of existing bundles may include average enrichment, R-factor data and local peaking data for individual fuel bundles of the given core, and data related to derivative matrices of a response surface model that define relationships between the bundle parameters and the configuration of the bundle, as described above.

The user-defined target conditions may include target pin type count (i.e., number of unique pins (fuel rods) in the existing bundle in terms of enrichment and/or gadolinium content), target average bundle enrichment, as well as desired core thermal limits (MAPLHGR, MFLPD, MFLCPR, etc.) for the given core. Margins and violations to the thermal limits of the core may also be input parameters. Data related to the user-defined target conditions and limits may be stored in a suitable database (not shown) within memory 120.

The initially selected fuel bundle(s) may then be inserted in a virtual core to be simulated (function 320) to obtain simulation results. The virtual core is a representative model of the given core that is to be simulated using a known simulator, in order to determine whether any of the core thermal limits have been violated, and additionally determining what bundles have excess margins to these core thermal limits.

Simulation results for each simulation may be stored in a suitable database (not shown) within memory 120. The simulation may be executed by calculation servers 150; however, the simulation may be a 3D simulation process that is run external to the arrangement 100. The user may employ well-known executable 3D simulator programs such as PANACEA, LOGOS, SIMULATE, POLCA, or any other known simulator software where the appropriate simulator drivers have been defined and coded, as is known. The calculation servers 150 may execute these simulator programs based on input by the user via GUI 145.

The user may initiate a 3D simulation at any time using GUI 145, and may have a number and different means to initiate a simulation. For example, the user may select a "run simulation" from a window drop down menu, or could click on a "RUN" icon on a webpage task bar, as is known. Additionally, the user may receive graphical updates or status of the simulation. Data related to each simulation of the virtual core may be queued in queue database (not shown) within memory 120. Once the simulation is queued, the user may have an audio and/or visual indication as to when the simulation is complete, as is known.

Once the virtual core has been loaded and a 3D core simulation run, resulting MFLPD, MAPLHGR, and MFLCPR values may be extracted from the 3D-simulator for all locations of the initially selected existing fuel bundle in the core, at all exposure points, and at all axial locations. This enables radial and axial dependent trends to be revealed. Further, with the core thermal limits, user-defined target conditions and 3D-simulator results identified above available to the user, violators may be identified in the core, and the violating values may be mapped back to create or revise target bundle parameters.

Referring to FIG. 3, if after the initial simulation there are no limit violations, and/or all target conditions are satisfied (output of function 330 is 'NO'), and if the user desires after the first iteration, data related to a desired fuel bundle configuration for the given core that satisfies the core thermal limits, user-defined target conditions, or both, may be output (function 340) to the user. For example, processor 110, via graphical user interface GUI 145, may output a suitable graphical display such as a target enrichment distribution map, and additional enrichment data related to estimated local peaking and estimated R-factor values, based on the applied enrichment change; it being understood that data related to the gadolinium content change could also be displayed to the user.

In practice, the user may not be satisfied with the initially accepted fuel bundle configuration, since it is likely that a simulated core such as described above will have several fuel bundles violating core thermal limits, and/or several other fuel bundles which have additional margin to these limits which could be exploited. Thus, if the output of function 330 is 'YES', then it is determined whether the core loaded with the initially selected fuel bundles (which may or may not be actual fuel bundles currently being used in the given core being modeled) shows any improvement (function 350). Improvement may be measured by a core objective function calculation to yield a particular core objective function value. For the initial iteration, an objective function value may be calculated, as a function of the input limits and target conditions, to correspond to each of the simulation results as a function of the input limits and target conditions. As discussed above, memory 120 may be configured as a relational database server, for example, that may be accessible by processor 110. A simulator results database and limits database within memory 120 may thus be accessed by the calculation servers 150 in order to calculate a number of objective function values that are applicable to a particular core design. The objective function itself, and calculated objective functions values may be stored in an objective function values database within relational database server (memory 120).

Thus, an objective function may be calculated for each simulation result in order to compare how closely a simulated core design meets the limits or target conditions. An objective function is a mathematical equation that incorporates constraints (in this context a 'constraint' represents a core thermal limit of the given core to be modeled) and quantifies the core design's adherence to the limits. For example, based upon the results of the simulation and the calculated objection function values, the user, who may be a core designer, engineer or plant supervisor for example, is able to determine if a particular design meets the user's target conditions (i.e., meets a maximum cycle energy requirement).

An objective function value may be calculated for each individual constraint parameter and for each simulation result, and for all constraint parameters as a whole, where all constraint parameters represent the entity of what is being evaluated in a particular core. An individual constraint component of the objective function may be calculated as described in expression (5):

$$OBJ_{par} = MULT_{par} * (RESULT_{par} - CONS_{par}). \qquad (5)$$

In expression (5) "par" may be any of the input limits. It is to be understood that these parameters are not the only parameters that could be possible candidates for evaluation, but are parameters which are commonly used in order to determine a suitable fuel bundle configuration for a core of a nuclear reactor. The total objective function may be a summation of all constraint parameters, or

$$OBJ_{TOT} = SUM(par=1, 31) \{OBJ_{par}\}. \qquad (6)$$

In expression (6), 31 different constraint parameter (e.g., limits) are indicated, it being understood that more or less could be selected for a given objective function calculation. Additionally, expressions (5) and (6) are only exemplary equations for calculating objective function values, the exemplary embodiments are not so limited to objective function values calculated based on expressions (5) and (6). Referring to expression (5), if RESULT is less than CONS (e.g. there is no violation of a constraint), the difference is reset to zero and the objective function will be zero. Accordingly, objective function values of zero indicate that a particular constraint has not been violated. Positive values of the objective function represent violations that may require correction. Additionally, the simulation results may be provided in the form of special coordinates (i, j, k) and time coordinates (exposure step) (e.g., particular time in a core-energy cycle). Therefore, the user can see at which time coordinate (e.g., exposure step) the problem is located. Hence, the core is modified only at the identified exposure step.

In addition, objective function values may be calculated as a function of each exposure step, and totaled for the entire core design problem. The objective function values calculated for each constraint, and the objective function values per exposure step, may be further examined by normalizing each objective function value to provide a percentage contribution of a given constraint to a total objective function value. The objective function values may be utilized in the manual determination of fuel bundle configuration development. For example, the values of the objective function calculations may be viewed graphically by the user in order to determine parameters that violate limits.

Moreover, any change in objective function values from objective function values calculated from previous simulations of the virtual core provides the user with a gauge to estimate improvement (or lack thereof) in their proposed design. Increases in an objective function value over several iterations indicate that the user's changes are creating a core design that is moving away from a desired solution, while successive iterations of lesser objective functions values (e.g., the objective function value decreasing from a positive value towards zero) may indicate improvements in the iterative core design. The objective function values, limits and simulation results over successive iterations may be stored in various subordinate databases within memory 120. Therefore, designs from past iterations may be quickly retrieved, should later modifications prove unhelpful.

Referring to FIG. 3, an initial, lowest reference core objective function value has been calculated and stored in advance for a given core to be modeled. Thus, if the calculations after the initial simulation show no improvement, (output of function 350 is 'NO'), the user may perform a global optimization routine (function 390) to be described in further detail below, in order to configure a fuel bundle configuration that does show improvement over the current or initial fuel bundle configuration of the core being modeled.

Upon completion of the objective function calculation, the user may be provided with data related to the objective function calculations, which may include limits that have been violated during the simulation of an evaluated core design. Graphical data may be displayed by the user after each iteration, if desired, such as a displayed list of constraint parameters which may represent the input limits, and the values of each of objective function value calculation on a per constraint basis. Limits which have been violated may be highlighted with a suitable graphical indicator, and for each limit violation, its contribution and percent (%) contribution may also be displayed. Accordingly, based on this data, the user may be provided with a recommendation as to what core modifications need to be made to the core design, if any, for a subsequent iteration.

Although the individual core modifications may alternatively be left to the desires of the user, procedural recommendations may be provided in the form of a pull down menu on a display, for example. These recommendations may be divided into categories such as energy beneficial moves, energy detrimental moves, and converting excessive margin (from thermal limit) into additional energy, although other categories could be developed. A preferred technique is to address problems using energy beneficial moves rather than energy detrimental moves. Even if the core design meets all of the limits (client-inputted plant specific constraints, design limits, thermal limits, etc.) the user may verify that any excessive margin to a particular limit is converted into additional energy. Accordingly, the following logic statements may represent exemplary procedural recommendations, it being understood that the exemplary embodiments of the present invention are not limited solely to these recommendations:

Energy Beneficial Moves

- If Critical Power Ratio (CPR) margin is too low towards core perimeter, bring more reactive fuel toward core center

- If NEXRAT (Nodal Exposure Ratio, a thermal margin constraint) problem at end-of-cycle (EOC), move more reactive (e.g., less exposed) fuel to problem location

- If ShutDown Margin (SDM) problem at perimeter of core at beginning of cycle (BOC), place less reactive fuel towards perimeter

Energy Detrimental Moves

- If CPR margin too low at EOC, move less reactive fuel into problem location

- If kW/ft margin too low at EOC, move less reactive fuel into problem location

Converting Excessive Margin into Additional Energy

If extra CPR margin in center of core at EOC, move more reactive fuel from perimeter locations to core center.

If improvement is shown (the output of function 350 is 'YES") as the calculated objective value is lower than the initial, lowest reference objective function value calculated in advance for the core being modeled, then any limit violations and margins to limits for the initially selected bundles may be mapped back to the fuel bundle(s) to create target fuel bundle parameters (function 360) in which to build a modified, or test fuel bundle configuration.

The target fuel bundle parameters may be determined based on a difference between actual core thermal limits and desired core thermal limits (margins) of the given core. This is the case for local peaking and R-factor since they are linearly related to the core's thermal limits. In order to utilize this linearity, core and bundle thermal values are related as described in the equations of expression (7):

$MFLCPR_i = \alpha_i R, \; \alpha_i \in \Re$

$$MFLPD_i = b_i LP \,, \;\; b_i \in \Re \qquad\qquad (7)$$

$MAPLHGR_i = c_i LP, \; c_i \in \Re$

In expression (7), i denotes core positions.

Thus, once the virtual core has been loaded and a 3D core simulation run, resulting MFLPD, MAPLHGR, and MFLCPR values may be extracted from the 3D-simulator for all locations of the initially selected existing fuel bundle in the core, at all exposure points, and at all axial locations. This enables radial and axial dependent trends to be revealed. Further, with the core thermal limits, user-defined target conditions and 3D-simulator results identified above available to the user, violators may be identified in the core, and the violating values may thus be mapped back to the bundle parameters.

This may be accomplished as follows, using MFLCPR and R-factor as an example. Let $\Delta MFLCPR = MFLCPR_i$ -$MFLCPR_{limit}$, and let the original R-factor (of the existing fuel bundle before enrichment change) be denoted as $R_0$. Using the linearity above, we have:

$$\frac{\Delta R}{R_0} = \frac{\Delta MFLCPR_i}{MFLCPR_i} \qquad\qquad (8)$$

Accordingly, a revised target bundle parameter for R-factor at a given exposure may be determined as follows in expression (9):

$$R_{t\arg et} = R_0 - \Delta R = R_0 \left[ 1 - \frac{\max\limits_i \left( \Delta MFLCPR_i \right)}{MFLCPR_i} \right]. \qquad (9)$$

Thus we can refer to the relative change in MFLCPR in expression (10) that corresponds with a particular ΔR:

$$\frac{\max\limits_i \left( \Delta MFLCPR_i \right)}{MFLCPR_i} \qquad (10)$$

Positive values of this relative change imply that the core limits have been exceeded; negative values imply margin to core limits. Equations analogous to expressions (8), (9), and (10) relating the relative change in MFLPD (or alternatively, MAPLHGR) to ΔLP may be derived in a similar manner.

If the corresponding input core thermal limits are not in violation, then the target fuel bundle parameters are actually higher than the initial fuel bundle parameters. This results in the utilization of any margin that is available.

These target fuel bundle parameters then become the benchmark, i.e., the set of parameters against which each set of model parameters will be compared.

Model fuel bundle parameters for building test bundle(s) may then be determined for use in a local optimization routine (function 370). The model bundle parameters provide the basis for building one or more test fuel bundles for insertion into the virtual core. The model fuel bundle parameters may include R-factor data, local peaking data and bundle enrichment data that are resultant of the enrichment configuration of that bundle.

The model fuel bundle parameters may be determined based on local changes in pin types (function 372) at various pin locations in an existing fuel bundle of the given core. These changes may change the initial bundle parameters, and it is desired that these "model" fuel bundle parameters be as close to the target bundle parameters as possible. In other words, one of enrichment and gadolinium content of a pin in a fuel bundle is changed. The change is used in conjunction with response surface derivatives (the derivatives having been calculated in advance and stored in memory 120, or calculated in real time, depending on the desire of the user) to calculate (function 374) the model bundle parameters, which can then be compared with the target bundle parameters. This may be done for each given pin type in each pin location in an existing fuel bundle of a given core to be modeled.

The pin-by-pin analysis may be performed manually using the arrangement 100 outlined in FIG. 1. Instead of having to rebuild the bundle after each pin change to determine whether the change in parameters was positive (i. e., the model parameters are closer to the target parameters), the user may manually use the derivatives to determine the status of the model parameters. The user could change one pin, retrieve derivative matrices in memory 120, and then multiply the derivative matrices by the pin change to determine resultant changes in bundle parameters. The user could do this over and over until a satisfactory set of model bundle parameters is reached.

As previously discussed, a collection of delta matrices that contain all of the exposure, void, and lattice dependent "derivatives" of local peaking, R-factor, and bundle enrichment versus changes in pin enrichment may be developed, in advance, and stored in memory 120, or calculated concurrently in real time based on the processing capacity and speed of processor 110, and calculation servers 150. These derivatives may be calculated and stored for all pin locations of a fuel bundle. For example, since bundle R-factor is exposure and pin location dependent, the R-factor Derivative Matrix in expression (3) exists for each exposure value. Likewise the Local Peaking Derivative Matrix in expression (1) exists for each exposure, void, and lattice value.

These matrices may be employed in an linear superposition model (LSM), such that changes in parameters for a single pin enrichment change (e.g., R-factor across the bundle) may be described as shown in expression (11):

$$\Delta R = \left[ \frac{\Delta R}{\Delta E} \right]_0 \cdot \Delta E_i . \qquad (11)$$

In expression (11), *i* correlates to a specific pin change in a specific location, and the subscript 0 refers to an initial state. Empirically, it has been determined that these derivatives can be used generically for all enrichment-dependent bundle design concepts, while providing accurate prediction capability in mapping the response of local peaking and R-factor, regardless of initial bundle enrichment or how far the initial bundle design is from a desired fuel bundle configuration or design.

Alternatively, optimization techniques may be used to substantially reduce processing time for determining a desired set of model bundle parameters for building the test bundle(s). In particular, optimization can systematically change individual enrichment and burnable poison values in the fuel bundle, calculate model parameters using the derivative matrices, and compare the model and target parameters to determine whether each change should be kept (and stored in memory 120), thus optimizing the set of changes that create a desired test bundle for the core. This may be performed iteratively; i.e., changing pin types in a given pin location in the fuel bundle, for each pin location and each of a plurality of given different pin types. The different or changed pin type may be understood as a pin having a different enrichment and/or gadolinium content than the previous pin type in the pin location, for example.

Accordingly, the model fuel bundle parameters may be calculated, either manually or by using the derivative matrices in conjunction with the enrichment/gadolinium change of replacing an existing pin in the bundle with new pin type from a user-defined pin library. Alternatively, NRC pre-approved bundle simulation codes, such as TGBLA or CASMO, may be used instead of manual calculation or from derivative matrices of a response surface model. The simulation codes would calculate the bundle model parameters as the optimization progressed.

During the optimization, an exhaustive enumeration of pin types and pin positions may be explored, and changes may be accepted according to the optimization technique or algorithm selected, and hence based on calculated objective function values (function 376). The objective function, initially outlined in expressions (5) and (6), may be stated even more generically by expression (12):

$$\sum_P \sum_E p_{\mathrm{model}} - p_{t\arg et} , \; p \in P , \qquad (12)$$

where P denotes the set of parameters to be optimized, and E denotes exposure. These objective function values may also be summed over lattices for local peaking.

The pin change with the highest ranked (lowest, positive valued) objective function value (output of function 378 is 'YES') may be accepted as a desired fuel bundle configuration for the test bundle after each complete sweep (each i-th location has been subjected to a pin change) through the fuel bundle, until all pin changes have been made at each i-th location (output of function 379 is 'YES'). The objective function employed (and how the highest ranked objective function value is selected) may be optimization-algorithm dependent, as will be discussed further below.

Accordingly the cycle begins again. If the test bundle(s) configuration determined from model bundle parameters within the local optimization routine (function 370) show improvement (output of function 380 is 'YES', i.e., the lowest objective function value from function 370 shows an improvement over the objective function values calculated from the initial simulation results at function 350), then functions 320, 330, 340, 350 and 360 may be repeated. For example, if simulation of the virtual core loaded with the test bundles still causes the core to exceed its limits, then margins and violations to the limits in the core are determined and mapped back to the bundle parameters to revise the target bundle parameters. In other words, global effects on the core are mapped back to local parameters of one or more of the test bundles, in order to revise the target and/or model parameters.

On the other hand, if the test bundles generated from the local optimization routine 370 do not show improvement (output of function 380 is 'NO'), then the user may be directed to perform a global evaluation, simulating the virtual core with the modified test bundle (step 385). After this global optimization, steps 320 - 390 may be repeated until there are no further limit violations, and/or no further improvement can be shown. The user may then obtain data for a desired fuel bundle configuration at step 340 or 493.

Alternatively, and as an exemplary application, even though a user has a satisfactory fuel bundle configuration, the user may add additional target conditions and re-perform the method. For example, in addition to no thermal limit violations and/or all user-defined target conditions met, the user may desire a fuel bundle configuration having a reduced number of different pin types, in order to reduce manufacturing and/or sales costs, for example. In other words, the user may continue to change pin types and simulate a core with one or more revised test bundles until no further improvement is shown (and no limit violations are present, for the test fuel bundles configured with a reduced number of pin types).

Thus, a user may employ arrangement 100 to automate (or to control such operations manually via GUI 145) subsequent iterations (functions 310-390) of determining model fuel bundle parameters via optimization, simulating and outputting the simulation results to determine if any improvement exists. Moreover, the simulation results may be subjected to objective function calculations to determine a most desired simulation result based on the highest ranked (lowest positive valued) objective function value from a given simulation. Thus, a fuel bundle may be manufactured based on the data related to this desired fuel bundle configuration, such as R-factor, local peaking and average enrichment across the bundle data.

In other words, functions 310-390 may be iteratively repeated until a calculated lowest objective function value indicates no improvement over a previous iteration. Thus, a desired fuel bundle configuration may be achieved that satisfies core thermal limits and user-defined target conditions using the fewest number of pin types in the fuel bundle.

OPTIMIZATION ALGORITHMS

An optimization technique for the exemplary embodiments may be selected from one of a deterministic-based optimization algorithm and a random-based optimization algorithm. An example of a deterministic-based optimization algorithm is a method of steepest descent. In a steepest descent optimization, each pin position in a fuel bundle is methodically analyzed with each different pin type inserted therein. In other words, each pin type is tried in each location, and, as part of the optimization, an objective function is run for each fuel bundle configuration to get an objective function value. The lowest, positive objective function value represents the highest ranked objective function value in terms of a fuel bundle configuration having model parameters that are closest to the determined target bundle parameters, which does not violate any of the core thermal limits (or has the fewest number of violators). Hence, the fuel bundle with the lowest objective function value may be selected as the first iteration of the test bundle to be inserted and simulated in the virtual core.

Simulated annealing is just one example of a random-based optimization algorithm. The simulated annealing optimization algorithm looks to avoid local minima when searching for a global minimum by occasionally accepting "bad" changes in order to fully explore the search space. This is in contrast to steepest descent, which always accepts the best choice in an iteration, and tends to get caught in local minima. With simulated annealing, a pin-type from the pin library and a pin position in the bundle are selected randomly. The change in enrichment for inserting that pin in the chosen location is determined and the objective function computed (via the derivative matrices/response surface). Then the objective function value is tested: if it is better than the initial objective value that the fuel bundle had without being changed, then it is accepted.

If the change yields a higher objective function value (i.e., the changed bundle is worse than the existing or initial fuel bundle), then the change is accepted with decreasing probability as iterations increase. Thus, initially, many "bad" changes are accepted, while towards the end of the optimization, very few "bad" changes are accepted. Mathematically, this probability of acceptance may be described by expression (13):

$$AF\ p = e^{-\frac{\Delta F}{T(n)}}, \tag{13}$$

where $\Delta F$ is the objective function change between the currently accepted and new bundle pin configurations and $T$ $(n)$ may be a temperature defined by expression (14):

$$T(n + 1) = T(n) * \alpha \tag{14}$$

where $n$ is the iteration number and $\alpha$ is the "cooling" constant, i.e., the rate at which the temperature decreases. A higher (slower) rate insures that the search space is properly explored, while a lower (faster) rate can cause the optimization to settle on a local minima. A set number of pin changes may be tried at each iteration, such as any number of set changes from a few to several thousand, and preferably about 100 to 1000. All of these parameters have defaults in the GUI 145, but may be changed by the user for an atypical optimization run.

The following expression (15) illustrates an exemplary calculation for a model R-factor fuel bundle parameter $R_{model}$, based on $\Delta R_i$ from expression (4). In expression (15), $n$ is the number of possible pin type changes:

$$R_{model} = R_0 + \sum_{i=1}^{n} x_i \Delta R_i, x_i \in \mathrm{N} \cap [0,1] \tag{15}$$

As previously discussed, an objective function may be employed to evaluate each pin type change in each pin location, to determine an objective function value for a fuel bundle with the pin type change in the particular pin location. The fuel bundle configuration with the lowest (i.e., highest ranked) objective function value may be selected as the initial (revised) test fuel bundle for insertion in the virtual core.

Once the virtual core has been loaded and a 3D core simulation run, resulting MFLPD, MAPLHGR, and MFLCPR values are extracted from the 3D-simulator for all locations of the test fuel bundle in the core, at all exposure points, and at all axial locations. This enables radial and axial dependent trends to be revealed. Further, with the core thermal limits, user-defined target conditions and 3D-simulator results identified above available to the user, violators may be identified in the core, and the violating values may be mapped back to the bundle parameters, as discussed with respect to FIG. 3.

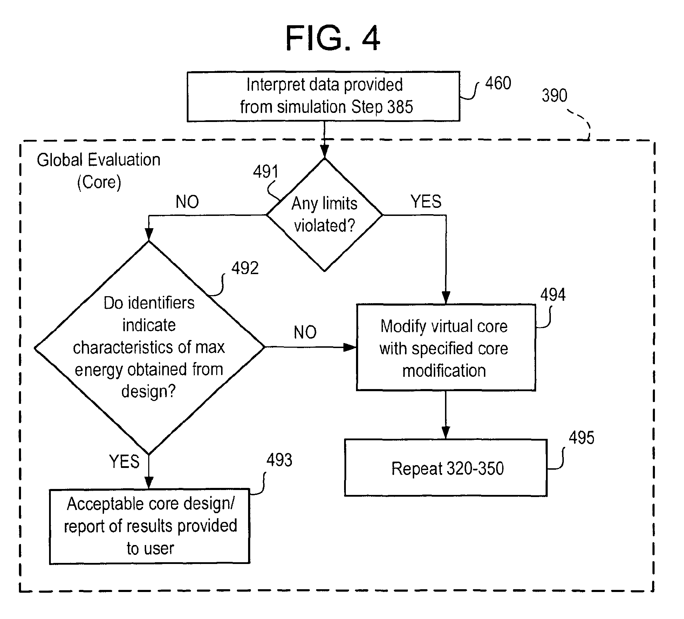

FIG. 4 is a flow diagram describing a global optimization routine in accordance with an exemplary embodiment of the invention. Referring to FIG. 4, by interpreting the data at step 460, which may be a graphical display of limit violators for example, which may be embodied as results from the simulation of the virtual core at step 385, for example, the user may be inclined to initiate a global optimization subroutine (step 390). In practicality, the original core design with original test bundle(s) will not be an acceptable design, and global optimization may be required if simulation yields no core improvement (output of function 350 is NO), such as may be the case where certain core thermal limits are still violated with each iteration.

In one embodiment, the user can manually direct global optimization, with the help of GUI 230. In another embodiment, the subroutine may be performed within the bounds of an optimization algorithm that automatically iterates modifying of the reference core design, simulation, calculation of objective function and evaluation of the results or values of the objective function calculations for a number of core design iterations.

The user determines, based on the displayed data, whether any limits are violated (function 491). If no limits are violated, the user determines if any identifiers indicate that characteristics of maximum energy are obtained from the core design. For example, these identifiers may include an indication of good thermal margin utilization (such as margins on MFLCPR and MAPLHGR) by moving fuel so as to maximize plutonium generation for cycle extension. Energy requirements may be shown to be met when a minimum end-of-cycle (EOC) eigenvalue is obtained for the core design to be used for the fuel cycle (eigenvalue search) or the desired cycle length is determined at a fixed EOC eigenvalue. If there is an indication that maximum energy has been obtained from a core design (the output of function 492 is YES), an acceptable core design has been determined, and the user may access a report of the results (related to the core design (function 340, shown by dotted line in FIG. 3), or , more likely, will more likely evaluate whether there are limit viola).

If limits are violated (the output of function 491 is YES) or limits are not violated but there is an indication that maximum energy has not been obtained from the core design (the output of function 492 is NO) then the user determines one or more specified core modifications (function 494). The specified core modifications could be embodied as a fresh fuel loading pattern modification, an exposed fuel loading pattern, as changes in control blade configuration or flow, or as a sequence exchange, to be made to the current core design with test bundle. This is where the user makes global core modification, via system-provided procedural recommendations (e.g., the aforementioned energy beneficial moves, energy detrimental moves, and converting excessive margin (from thermal limits) into additional energy, by accessing a pull down menu), for example. Additionally, if several iterations of core design changes have been attempted and there has been no real improvement, in terms of a lower objective function value, this is a further indication that an alternative core design with a different test bundle(s) might need to be explored. Accordingly, the virtual core may be re-loaded with the different test bundles, and functions 320-350 may be repeated.

In making a modification to the fresh fuel loading pattern, and based on the recommendations from above, the user may alter the fresh bundle loading pattern via the GUI 145. For example, and using a suitable input device and GUI 145, a designer may identify the bundle symmetry option of any potential fresh bundle(s) in the reference core design to be moved, and may select the "target" fresh fuel bundle(s), the destination(s) where the target bundle (s) is/are to be moved. The identified target bundles are then "shuffled" according to the required symmetry (mirror, rotational, etc.). This process may be repeated for any fresh bundle shuffle that is required to re-load the core reference pattern in the desired manner.

EXEMPLARY DEVELOPMENT OF RESPONSE SURFACE MODEL

In order to collect the partial derivatives of how enrichment affects local peaking and R-factors, a response surface model was developed in advance, it being understood that the aforementioned derivative matrices could be dynamically calculated to meet a given fuel bundle design problem. The response surface model included the exposure dependent local peaking and R-factor response for every pin in a 10x10 fuel bundle lattice design as a function of a change in enrichment in every pin.

In order to prepare the database, 51 (the number of distinct pins in a 10x10 bundle, and will differ for other fuel designs) fuel bundles were individually modeled, with the bundle characteristics, including local peaking, exposure peaking and R-factor data for each pin in each modeled bundle stored in a database. Once the response surface was determined, there were interesting results. The derivatives of the response surface matrix were far less sensitive to the initial conditions. The derivatives provided extremely accurate predictions, regardless of the initial enrichments in a modeled fuel bundle. Consequently, substantially perfect or perfectly optimized bundles could be generated in just a few iterations. This "generic" response surface has been found to be accurate on other lattice types. Hence, a single database has been created that may be useful for all types of fuel. Because it took a relatively small amount of time to make predictions from the database, relatively accurate predictions of a fuel bundle's response could be determined in less than a minute, compared to over four (4) hours it took to generate a bundle through conventional "rules of thumb" processes.

Examples/Results

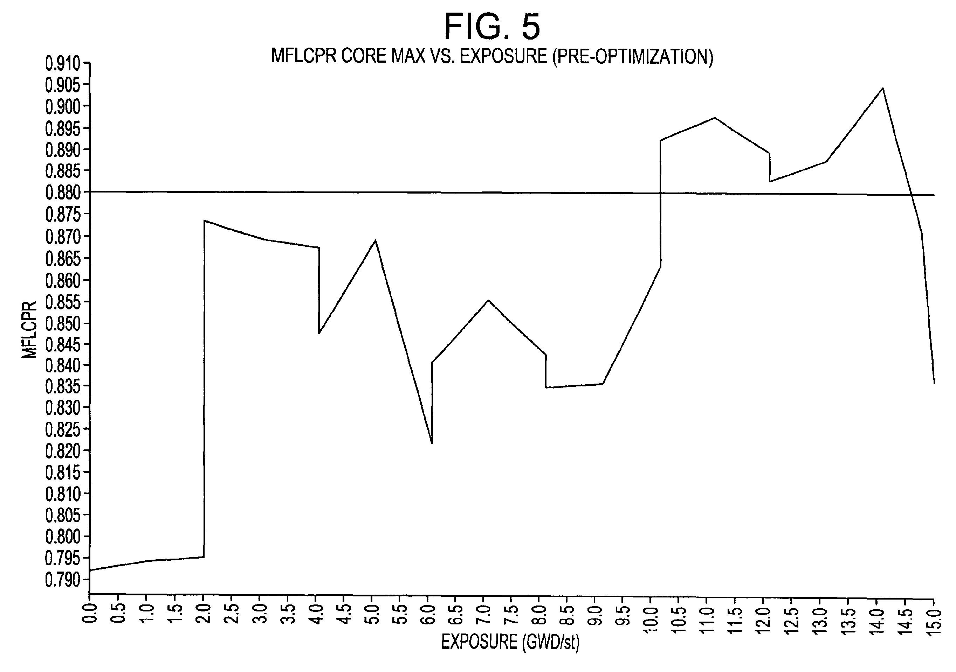

The following, with reference to FIGS. 5-14, provides an actual example employing the methods in accordance with the exemplary embodiments to design fresh fuel bundles for an actual core of an operating nuclear reactor plant. In this example, one fresh bundle designed in accordance with the exemplary embodiments was to be inserted in 256 positions throughout the core. The designers created the bundle with a satisfactory gadolinium configuration, but MFLCPR exceeded the core limit of 0.88 near the end of cycle (EOC), even after a core optimization and several attempts at bundle design by hand. MFLPD adhered initially to the limit of 0.85.

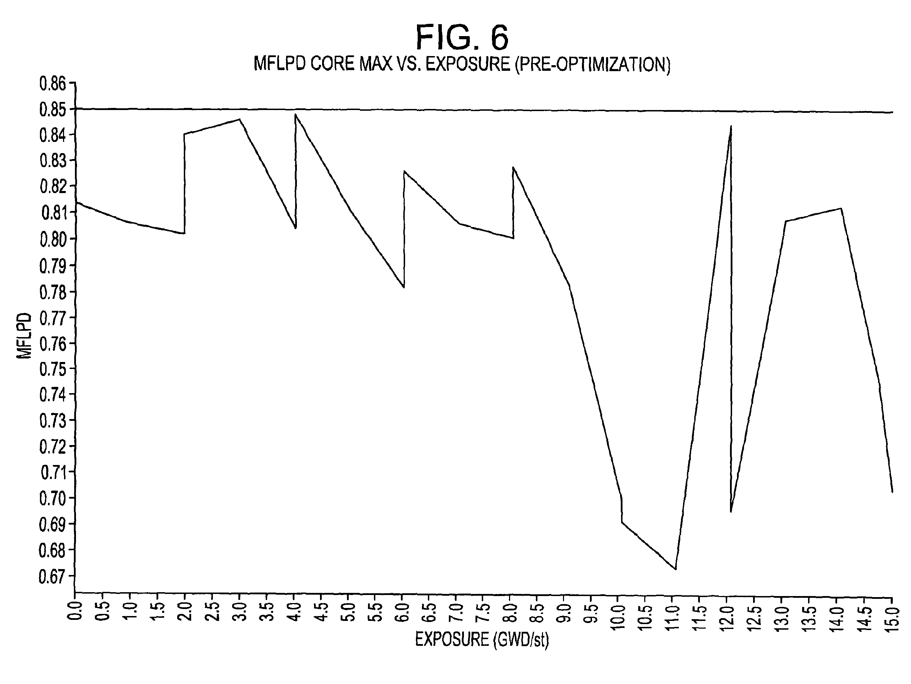

FIG. 5 is a graph of Maximum Fraction of Limiting Critical Power Ratio (MFLCPR) versus exposure for an initial, unmodified fuel bundle configuration of the actual, and FIG. 6 is a graph of Maximum Fraction of Limiting Power Density (MFLPD) versus exposure for an initial, unmodified fuel bundle configuration of a given core. These figures illustrate the state of the core's thermal values with this initial bundle inserted into a virtual core, after a core optimization run.

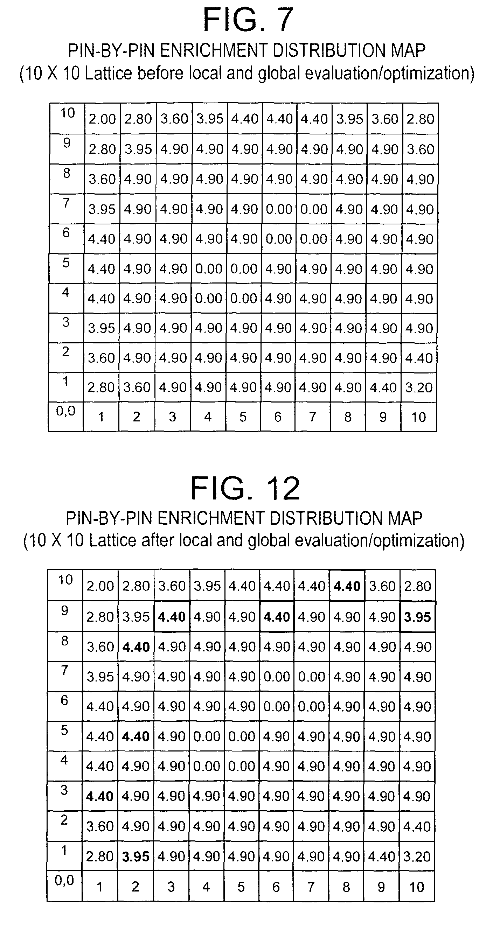

FIG. 7 illustrates the enrichment configuration of the fuel bundle prior to optimization in accordance with an exemplary embodiment of the invention. In particular, FIG. 7 shows a 2-D lattice enrichment distribution for each pin in a fuel bundle before execution of the method in accordance with the exemplary embodiments of the invention. Pins showing 0.0 is indicative of water rods of this particular 10x10 example. Application of the exemplary embodiments may be performed on fuel bundles with or without water rod. For this particular core design, the fuel bundle could not be axially enriched. Thus the rod (pin) pool for the bundle optimization contained only homogenous pins. In other words, the pins in this bundle had the same enrichment throughout.

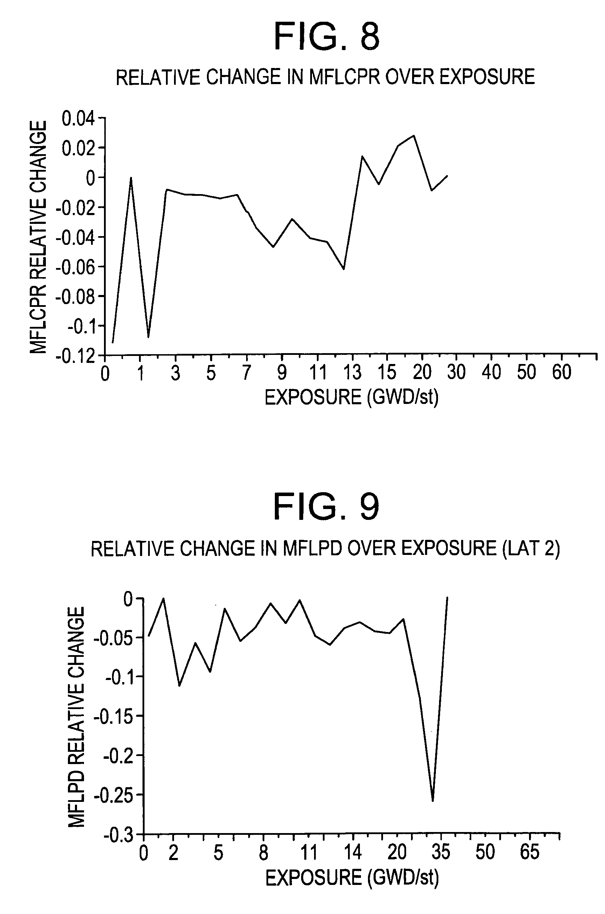

FIG. 8 illustrates a relative change in MFLCPR over exposure for a core that includes a fuel bundle modeled in accordance with exemplary embodiments of the invention; and FIG. 9 illustrates a relative change in MFLPD over exposure for a core that includes a fuel bundle modeled in accordance with an exemplary embodiment of the invention. In particular, the relative change in MFLPD was evaluated for a bundle with a most limiting lattice being lattice 2 (LAT 2). These relative changes in FIGS. 8 and 9 were calculated similar to as described with respect to expression (10). The differences between the core thermal limits and the actual core parameters values are mapped back to the initial bundle parameters to create the target fuel bundle parameters. Thus, the relative changes that represent the above differences are illustrated in FIGS. 8 and 9.

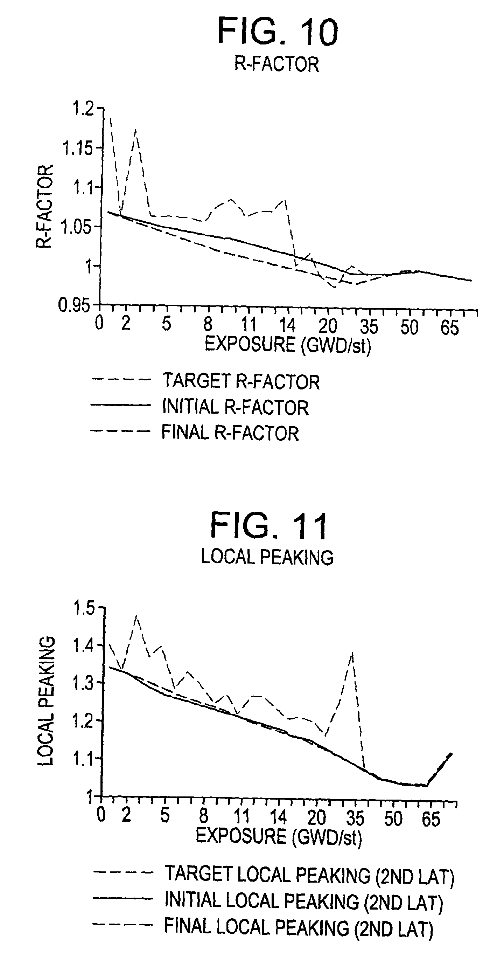

FIG. 10 illustrates maximum R-factor values over exposure after core simulation of a fuel bundle configured in accordance with an exemplary embodiment of the invention; and FIG. 11 illustrates maximum local peaking values over exposure after core simulation of a fuel bundle configured in accordance with an exemplary embodiment of the invention. FIGS. 10 and 11 display the initial, target and final (after optimization) R-Factor and local peaking values for the bundle. Because the relationships between bundle parameters and core parameters are linear (R-Factor to MFLCPR, local peaking to MFLPD and MAPLHGR), exposure values needing improvement in the core correspond to the exposures that need improvement in the bundle.

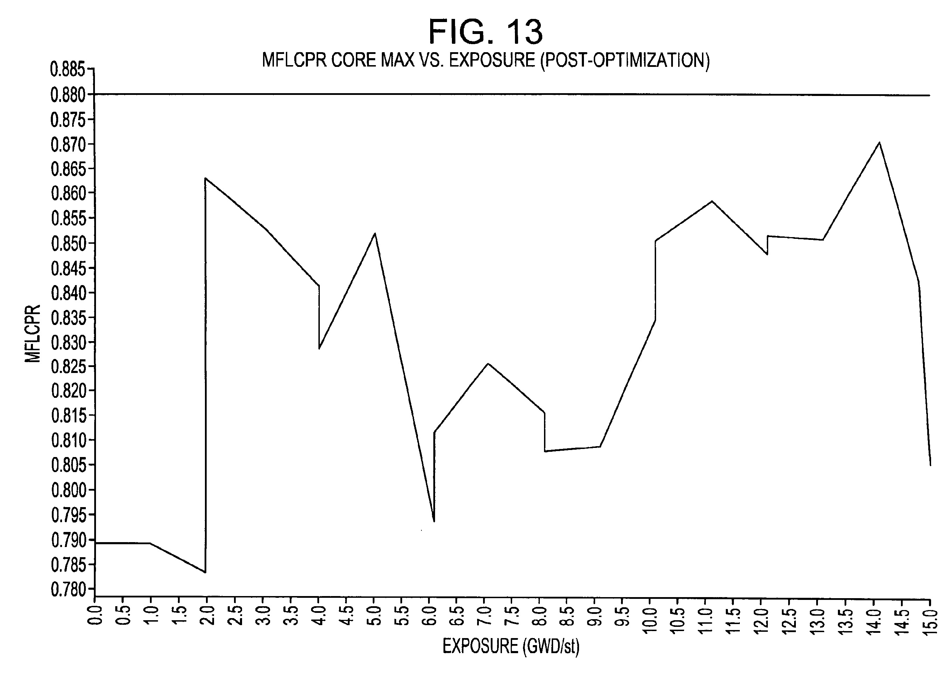

FIG. 12 illustrates the enrichment configuration of the fuel bundle after optimization in accordance with an exemplary embodiment of the invention. Once target values were determined from the core violation ratios, the optimization yielded the enrichment configuration in FIG. 12. Note that this enrichment configuration is not substantially different from the configuration in FIG. 7. However, the enrichments in FIG. 12 in bold illustrate the changed pin positions. A total of eight pin changes mitigated the CPR problem for this particular core. Although other examples could have more drastic changes, in this particular example the bundle designer was initially somewhat close to a correct solution, but could not create the bundle that would fit the core exactly.

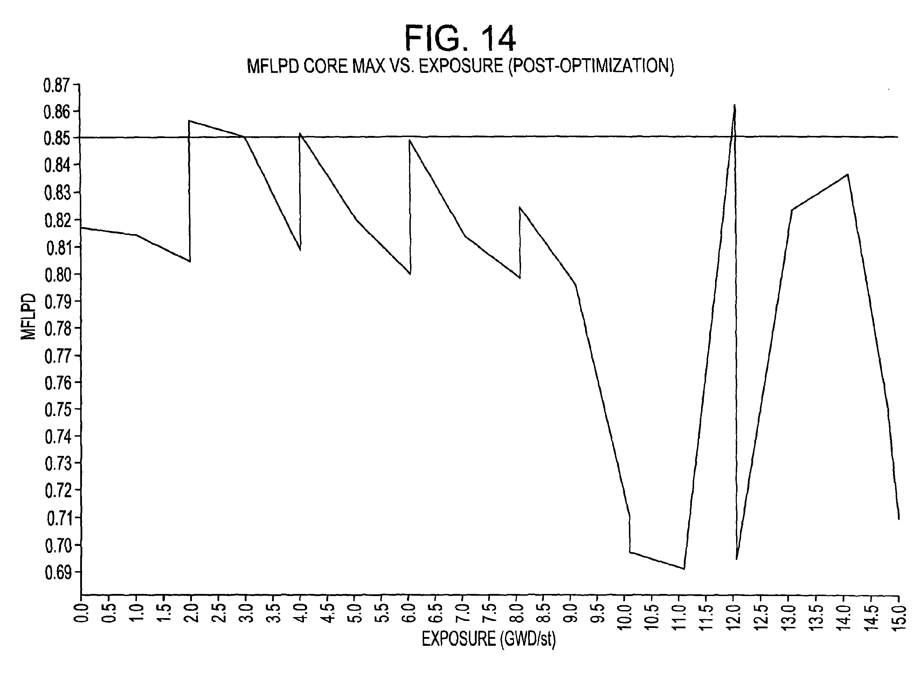

FIG. 13 illustrates MFLCPR across the core after insertion of the optimized fuel bundle in accordance with an exemplary embodiment of the invention; and FIG. 14 illustrates MFLPD across the core after insertion of the optimized fuel bundle in accordance with an exemplary embodiment of the invention. FIGS. 13 and 14 show the status of the core after the optimized bundle was inserted. MFLCPR was completely resolved, while MFLPD slightly exceeded its limits. However, these small MFLPD violations were easily eliminated with another global core optimization.

The exemplary embodiments of the present invention being thus described, it will be obvious that the same may be varied in many ways. For example, although the exemplary embodiments have been described in terms of determining a desired fuel bundle configuration for one location in the given core, one bundle type may be used in many different bundle locations within a core. Accordingly, the exemplary embodiments may also be directed to determining desired fuel bundle configurations for groups of bundles, e.g., 8, 16, 32, etc., that may be typically arranged together in a given core. Accordingly, optimization techniques may be applied to the groups, instead of a single bundle.

Alternatively, larger groups of bundles to be optimized may be divided into subgroups, and the subgroups may be modeled and optimized in accordance with FIGS. 3 and 4. Additionally, in light of the processing and computational capacity of arrangement 100, the method may be implemented in parallel for N sub-groups of a desired group of fuel bundles of a given core to be evaluated.

Further, although the exemplary embodiments employ the optimization techniques described above in order to determine a desired fuel bundle configuration in terms of local peaking, R-factor and average bundle enrichment, the exemplary embodiments are not so limited. For example, pin enrichments for a fuel bundle of a nuclear reactor may be calculated using response surface technology as set forth in co-pending and commonly assigned U.S. Patent Application Serial No: 10/425,611 to Russell, II, et al., filed April 30, 2003 and entitled "METHOD AND ARRANGEMENT FOR DETERMINING PIN ENRICHMENTS IN FUEL BUNDLE OF NUCLEAR REACTOR". In the '611 application, enrichment changes to be made across the fuel bundle may be calculated so as to satisfy the user-defined target conditions. This may be done using a response surface model. A response surface model defined in the '611 application defines relationships between input parameters and the target conditions.

For the sake of good order, various aspects of the invention are set out in the following clauses:-

1. A method of determining a fuel bundle configuration for a core of a nuclear reactor, comprising:

defining a plurality of inputs including at least core thermal limits, user-defined target conditions and bundle parameters for at least one existing fuel bundle of a given core;
simulating a virtual core loaded with said at least one existing fuel bundle to obtain simulation results;
comparing said simulation results against said core thermal limits;
modifying said at least one existing fuel bundle based on said comparing, including making pin-by-pin changes to determine a desired fuel bundle configuration for insertion into the virtual core that meets core thermal limits and user-defined target conditions.

2. The method of clause 1, further comprising mapping data related to at least one of violations to core thermal limits and margins to core thermal limits, based on said comparing, to the bundle parameters of said at least one existing bundle, thereby creating target bundle parameters.

3. The method of clause 2, wherein the plurality of inputs further include core parameters resulting from a previous virtual core simulation, for use in determining said target fuel bundle parameters.

4. The method of clause 2, further comprising:

repeating simulating, comparing, mapping and modifying until said comparing indicates that there is no improvement as between iterations; and
outputting, based on the simulation results, data related to a desired fuel bundle configuration for the given core satisfying at least one of the core thermal limits and the user-defined target conditions, and which meet said target parameters.

5. The method of clause 1, said comparing further including ranking the simulation results based on at least the core thermal limits, wherein a highest ranked simulation result is representative of an accepted fuel bundle configuration for the given core.

6. The method of clause 5, further comprising:

setting the virtual core with accepted fuel bundle configuration as a next virtual core design, if the highest ranked simulation result is an improvement over the given core with the at least one existing fuel bundle; and
performing a subsequent iteration of simulating and ranking to determine a revised accepted fuel bundle configuration for the given core,
else outputting data related to at least one of core thermal limits violated and bundles having additional margin to the core thermal limits during the simulation, if the highest ranked simulation result shows no improvement over the highest ranked simulation result of the originally simulated virtual core.

7. The method of clause 6, wherein the highest ranked simulation result from the second iteration represents a value, based on the core thermal limits, indicating a greatest improvement in core performance as compared to the highest ranked simulation result of the first iteration.

8. The method of clause 7, further comprising iteratively repeating the setting, simulating and ranking over N iterations until there is no further improvement in performance between highest ranked simulation results of successive iterations, until all core limits are met, or until as desired by the user, wherein the core performance relates to at least one or more of margins to core thermal limits and satisfaction of the user-defined target conditions.

9. The method of clause 1, wherein
the user-defined target conditions include at least one of target pin type count, target average bundle enrichment, a target R-factor value and a target local peaking value for the fuel bundle, and desired core thermal limits for the given core and margins thereto, and
determining target fuel bundle parameters includes determining the target fuel bundle parameters based on a difference between actual core thermal limits and desired core thermal limits of the given core.

10. The method of clause 1, wherein
the plurality of inputs further include core parameters and data related to derivative matrices of a response surface model defining relationships between the bundle parameters and a configuration of enrichment and burnable poison for said at least one existing fuel bundle, and
the bundle parameters further include R-factor data and local peaking data for individual fuel bundles of the given core.

11. The method of clause 1, further comprising:

mapping data related to at least one of violations to core thermal limits and margins to core thermal limits, based on said comparing, to the bundle parameters of said at least one existing bundle, thereby creating target bundle parameters;
said modifying including

making pin-by-pin types changes in one of enrichment and burnable poison content in a specified location in one or more existing bundles of the given core;

optimizing at least one of an enrichment change and a burnable poison loading change in said at least one fuel bundle to meet said target bundle parameters; and

applying said enrichment change or burnable poison loading change to at least one derivative matrix of a response surface to estimate model fuel bundle parameters, said model fuel bundle parameters selected from a group consisting of R-factor data, local peaking data and bundle enrichment data in which to build the modified fuel bundle.

12. The method of clause 11, wherein optimizing further includes, for each pin type of a set of selectable pin types:

iteratively changing pin types in a given pin location in the fuel bundle, a changed pin type representing a pin having a different enrichment and/or gadolinium content than the previous pin type in the given pin location; employing an objective function for determining an objective function value for a fuel bundle with the pin type change in the given location; and

selecting an objective function value based on a desired objection function value acceptance scheme.

13. The method of clause 12, wherein
    the objective function value acceptance scheme is optimization-algorithm dependent; and
    the optimization algorithm is one of a random-based and deterministic-based optimization algorithm.

14. The method of clause 1, further comprising:

outputting estimated local peaking data, R-factor data and average bundle enrichment for said desired fuel bundle configuration, for manufacturing a fuel bundle for insertion into the given core that satisfies the core thermal limits and user-defined target conditions.

15. A method of operating a nuclear reactor core having at least one fuel bundle configured in accordance with the method of clause 1.

16. A method of determining a fuel bundle configuration for a core of a nuclear reactor comprising employing one or more optimization routines analyzing pin-type by pin-type changes in one or more pin locations of a fuel bundle to achieve a desired fuel bundle configuration meeting user-defined target conditions and core thermal limits for a given core with the fewest number of different pin types.

17. The method of clause 16, wherein said employing includes optimizing at least one of a change in enrichment and a change in burnable poison content required in one or more pins to achieve said desired fuel bundle configuration.

18. The method of clause 16, further comprising:

outputting estimated local peaking data, R-factor data and average bundle enrichment for the desired fuel bundle configuration, for manufacture of a fuel bundle for the given core.

19. A method of operating a nuclear reactor core having at least one fuel bundle configured in accordance with the method of clause 16.

20. A method of determining a fuel bundle configuration for a core of a nuclear reactor, comprising:

determining target bundle parameters of an initial fuel bundle design for a given core to be modeled based on inputs that include at least user-defined target conditions, core parameters and core thermal limits for the given core; iteratively changing pin types in one or more locations in the initial fuel bundle design to determine model bundle parameters that substantially approximate the target bundle parameters;
inserting a test fuel bundle configured based on the model parameters in a virtual core that is a representative model of the given core;
simulating reactor operation of the virtual core to determine if the user-defined target conditions and core limits have been satisfied; and
outputting data related to a desired fuel bundle configuration with the fewest number of different pin types as an acceptable fuel bundle for the given core, once user-defined target conditions and core thermal limits have been met.

21. The method of clause 20, wherein the data related to the desired fuel bundle configuration with the fewest number of different pin types includes estimated local peaking data, R-factor data and average bundle enrichment for the desired fuel bundle.

22. The method of clause 20, wherein
the inputs further include R-factor and local peaking data for one or more individual fuel bundles, and data related to derivative matrices of a response surface defining relationships between said R-factor and local peaking data and said user-defined target conditions.

23. The method of clause 22, wherein said iteratively changing includes:

optimizing at least one of an enrichment change and a gadolinium content change required in the fuel bundle in order to achieve the target bundle parameters; and
applying the enrichment change or gadolinium content change to at least one derivative matrix of a response surface model to estimate the model parameters, the model parameters selected from a group comprising at least R-factor data, local peaking data and bundle enrichment data in which to build the test bundle.

24. The method of clause 23, wherein the at least one derivative matrix contains exposure, void and lattice dependent derivatives of local peaking, R-factor and bundle enrichment as a function of changes in pin enrichment and/or burnable poison content.

25. The method of clause 23, wherein optimizing further includes, for each pin type of a set of usable pin types:

iteratively changing pin types in a given pin location in the fuel bundle, a changed pin type representing a pin having a different enrichment and/or poison content than a pin replaced in the given pin location;
employing an objective function for determining an objective function value for a fuel bundle with the pin type change in the given location; and
accepting a fuel bundle corresponding to an objective function value selected with a desired objection function value acceptance scheme that is based on one of a random-based or deterministic-based optimization algorithm.

26. A method of operating a nuclear reactor core having at least one fuel bundle configured in accordance with the method of clause 20.

**Claims**

1. A method of determining a fuel bundle configuration for a core of a nuclear reactor, comprising:

defining (310) a plurality of inputs including at least core thermal limits, user-defined target conditions and bundle parameters for at least one existing fuel bundle of a given core;
simulating (320) a virtual core loaded with said at least one existing fuel bundle to obtain simulation results;
comparing (330) said simulation results against said core thermal limits; and
modifying (372) said at least one existing fuel bundle based on said comparing, including making pin-by-pin changes to determine a desired fuel bundle configuration for insertion into the virtual core that meets core thermal limits and user-defined target conditions.

2. The method of claim 1, further comprising mapping (360) data related to at least one of violations to core thermal limits and margins to core thermal limits, based on said comparing (330), to the bundle parameters of said at least one existing bundle, thereby creating target bundle parameters, wherein the plurality of inputs further include core parameters resulting from a previous virtual core simulation, for use in determining said target fuel bundle parameters.

3. The method of claim 2, further comprising:

repeating (495) simulating (320), comparing (330), mapping (360) and modifying (372) until said comparing indicates that there is no improvement as between iterations; and

outputting, (340) based on the simulation results, data related to a desired fuel bundle configuration for the given core satisfying at least one of the core thermal limits and the user-defined target conditions, and which meet said target parameters.

4. The method of claim 1, said comparing (330) further including ranking the simulation results based on at least the core thermal limits, wherein a highest ranked simulation result is representative of an accepted fuel bundle configuration for the given core.

5. The method of claim 4, further comprising:

setting (494) the virtual core with accepted fuel bundle configuration as a next virtual core design, if the highest ranked simulation result is an improvement over the given core with the at least one existing fuel bundle; and performing (495) a subsequent iteration of simulating and ranking (320) to determine a revised accepted fuel bundle configuration for the given core,

else outputting (340) data related to at least one of core thermal limits violated and bundles having additional margin to the core thermal limits during the simulation, if the highest ranked simulation result shows no improvement over the highest ranked simulation result of the originally simulated virtual core.

6. The method of claim 5, wherein the highest ranked simulation result from the second iteration represents a value, based on the core thermal limits, indicating a greatest improvement in core performance as compared to the highest ranked simulation result of the first iteration, the method further comprising iteratively repeating (495) the setting (494), simulating (385) and ranking over N iterations until there is no further improvement in performance between highest ranked simulation results of successive iterations, until all core limits are met, or until as desired by the user, wherein the core performance relates to at least one or more of margins to core thermal limits and satisfaction of the user-defined target conditions.

7. The method of claim 1, wherein

the plurality of inputs further include core parameters and data related to derivative matrices of a response surface model defining relationships between the bundle parameters and a configuration of enrichment and burnable poison for said at least one existing fuel bundle,

the bundle parameters further include R-factor data and local peaking data for individual fuel bundles of the given core,

the user-defined target conditions include at least one of target pin type count, target average bundle enrichment, a target R-factor value and a target local peaking value for the fuel bundle, and desired core thermal limits for the given core and margins thereto, and

determining target fuel bundle parameters includes determining the target fuel bundle parameters based on a difference between actual core thermal limits and desired core thermal limits of the given core.

8. The method of claim 1, further comprising:

mapping (360) data related to at least one of violations to core thermal limits and margins to core thermal limits, based on said comparing, to the bundle parameters of said at least one existing bundle, thereby creating target bundle parameters;

said modifying including

making (372) pin-by-pin types changes in one of enrichment and burnable poison content in a specified location in one or more existing bundles of the given core;

optimizing (390) at least one of an enrichment change and a burnable poison loading change in said at least one fuel bundle to meet said target bundle parameters; and

applying (374) said enrichment change or burnable poison loading change to at least one derivative matrix of a response surface to estimate model fuel bundle parameters, said model fuel bundle parameters selected from a group consisting of R-factor data, local peaking data and bundle enrichment data in which to build the modified fuel bundle.

9. A method of determining a fuel bundle configuration for a core of a nuclear reactor comprising employing (374, 376) one or more optimization routines analyzing pin-type by pin-type changes in one or more pin locations of a fuel bundle to achieve a desired fuel bundle configuration meeting user-defined target conditions and core thermal limits for a given core with the fewest number of different pin types.

**10.** A method of determining a fuel bundle configuration for a core of a nuclear reactor, comprising:

determining (310) target bundle parameters of an initial fuel bundle design for a given core to be modeled based on inputs that include at least user-defined target conditions, core parameters and core thermal limits for the given core;

iteratively (372) changing pin types in one or more locations in the initial fuel bundle design to determine model bundle parameters that substantially approximate the target bundle parameters;

inserting a test fuel bundle configured based on the model parameters in a virtual core that is a representative model of the given core;

simulating (320) reactor operation of the virtual core to determine if the user-defined target conditions and core limits have been satisfied; and

outputting (340) data related to a desired fuel bundle configuration with the fewest number of different pin types as an acceptable fuel bundle for the given core, once user-defined target conditions and core thermal limits have been met.

# FIG. 1

FIG. 2

Perturbation in Corner Rod Enrichment
(+0.2 wt% U235)

FIG. 3

Read in inputs via input device, GUI 145 to processor 110 for selected bundle(s) of given core to be evaluated — 310

390
Perform global optimization of virtual core loaded with test bundle

Simulate virtual core loaded with selected existing (test) bundle(s) to obtain simulation results — 320

385
Simulate virtual core with modified test bundle

Limit violation/user-defined tgt condition not satisfied? — 330  No

No

Yes

380
Does optimized bundle with lowest bundle objective function value show improvement as to previous bundle(s)

Yes

Does selected/test bundle yield improvement (core objective function) — 350

No

340
Output estimated LP, R-factor, ENR/Gad data of desired fuel bundle(s) configuration

Yes

360
Map violations and margins to core thermal limits to create/revise target bundle parameters (LP, R-factor, ENR/gad)

370

Make pin-by-pin change (ENR/gad) at each location i to modify selected fuel bundle(s) — 372

No

All pin-by-pin changes made at each location i ? — 379

From pin changes, using response surface model, create (revise) model bundle parameters — 374

No

Yes

Calculate objective function values from model, target bundle parameters — 376

378
Lowest bundle objective function value?

Yes

LOCAL EVALUATION (bundle)

# FIG. 4

Interpret data provided
from simulation Step 385 — 460

— 390

Global Evaluation
(Core)

491
Any limits
violated?

NO ← 491 → YES

492
Do identifiers
indicate
characteristics of max
energy obtained from
design?

NO →

494
Modify virtual core
with specified core
modification

↓

495
Repeat 320-350

YES ↓

493
Acceptable core design/
report of results provided
to user

## FIG. 5

MFLCPR CORE MAX VS. EXPOSURE (PRE-OPTIMIZATION)

EP 1 508 902 A2

# FIG. 6
## MFLPD CORE MAX VS. EXPOSURE (PRE-OPTIMIZATION)

# FIG. 7

### PIN-BY-PIN ENRICHMENT DISTRIBUTION MAP
### (10 X 10 Lattice before local and global evaluation/optimization)

| | 1 | 2 | 3 | 4 | 5 | 6 | 7 | 8 | 9 | 10 |
|---|---|---|---|---|---|---|---|---|---|---|
| 10 | 2.00 | 2.80 | 3.60 | 3.95 | 4.40 | 4.40 | 4.40 | 3.95 | 3.60 | 2.80 |
| 9 | 2.80 | 3.95 | 4.90 | 4.90 | 4.90 | 4.90 | 4.90 | 4.90 | 4.90 | 3.60 |
| 8 | 3.60 | 4.90 | 4.90 | 4.90 | 4.90 | 4.90 | 4.90 | 4.90 | 4.90 | 4.90 |
| 7 | 3.95 | 4.90 | 4.90 | 4.90 | 4.90 | 0.00 | 0.00 | 4.90 | 4.90 | 4.90 |
| 6 | 4.40 | 4.90 | 4.90 | 4.90 | 4.90 | 0.00 | 0.00 | 4.90 | 4.90 | 4.90 |
| 5 | 4.40 | 4.90 | 4.90 | 0.00 | 0.00 | 4.90 | 4.90 | 4.90 | 4.90 | 4.90 |
| 4 | 4.40 | 4.90 | 4.90 | 0.00 | 0.00 | 4.90 | 4.90 | 4.90 | 4.90 | 4.90 |
| 3 | 3.95 | 4.90 | 4.90 | 4.90 | 4.90 | 4.90 | 4.90 | 4.90 | 4.90 | 4.90 |
| 2 | 3.60 | 4.90 | 4.90 | 4.90 | 4.90 | 4.90 | 4.90 | 4.90 | 4.90 | 4.40 |
| 1 | 2.80 | 3.60 | 4.90 | 4.90 | 4.90 | 4.90 | 4.90 | 4.90 | 4.40 | 3.20 |
| 0,0 | 1 | 2 | 3 | 4 | 5 | 6 | 7 | 8 | 9 | 10 |

# FIG. 12

### PIN-BY-PIN ENRICHMENT DISTRIBUTION MAP
### (10 X 10 Lattice after local and global evaluation/optimization)

| | 1 | 2 | 3 | 4 | 5 | 6 | 7 | 8 | 9 | 10 |
|---|---|---|---|---|---|---|---|---|---|---|
| 10 | 2.00 | 2.80 | 3.60 | 3.95 | 4.40 | 4.40 | 4.40 | **4.40** | 3.60 | 2.80 |
| 9 | 2.80 | 3.95 | **4.40** | 4.90 | 4.90 | **4.40** | 4.90 | 4.90 | 4.90 | **3.95** |
| 8 | 3.60 | **4.40** | 4.90 | 4.90 | 4.90 | 4.90 | 4.90 | 4.90 | 4.90 | 4.90 |
| 7 | 3.95 | 4.90 | 4.90 | 4.90 | 4.90 | 0.00 | 0.00 | 4.90 | 4.90 | 4.90 |
| 6 | 4.40 | 4.90 | 4.90 | 4.90 | 4.90 | 0.00 | 0.00 | 4.90 | 4.90 | 4.90 |
| 5 | 4.40 | **4.40** | 4.90 | 0.00 | 0.00 | 4.90 | 4.90 | 4.90 | 4.90 | 4.90 |
| 4 | 4.40 | 4.90 | 4.90 | 0.00 | 0.00 | 4.90 | 4.90 | 4.90 | 4.90 | 4.90 |
| 3 | **4.40** | 4.90 | 4.90 | 4.90 | 4.90 | 4.90 | 4.90 | 4.90 | 4.90 | 4.90 |
| 2 | 3.60 | 4.90 | 4.90 | 4.90 | 4.90 | 4.90 | 4.90 | 4.90 | 4.90 | 4.40 |
| 1 | 2.80 | **3.95** | 4.90 | 4.90 | 4.90 | 4.90 | 4.90 | 4.90 | 4.40 | 3.20 |
| 0,0 | 1 | 2 | 3 | 4 | 5 | 6 | 7 | 8 | 9 | 10 |

# FIG. 8

RELATIVE CHANGE IN MFLCPR OVER EXPOSURE

# FIG. 9

RELATIVE CHANGE IN MFLPD OVER EXPOSURE (LAT 2)

## FIG. 10
R-FACTOR

## FIG. 11
LOCAL PEAKING

# FIG. 13
MFLCPR CORE MAX VS. EXPOSURE (POST-OPTIMIZATION)

MFLCPR

EXPOSURE (GWD/st)

EP 1 508 902 A2

# FIG. 14

## MFLPD CORE MAX VS. EXPOSURE (POST-OPTIMIZATION)

EP 1 508 902 A2